# EUROPÄISCHE PATENTSCHRIFT

(11) **EP 3 938 648 B1**
(45) Veröffentlichungstag und Bekanntmachung des Hinweises auf die Patenterteilung: **01.05.2024**
(21) Anmeldenummer: 20712280.5
(22) Anmeldetag: 16.03.2020
(51) Int. Cl.: F03D 1/06, F03D 17/00

(54) **FLANSCHVERBINDUNG, WINDENERGIEANLAGE MIT SELBIGER, UND VERFAHREN ZUR ÜBERWACHUNG SELBIGER**
FLANGE CONNECTION, WIND TURBINE HAVING SAME, AND METHOD FOR MONITORING SAME
RACCORDEMENT À BRIDE, ÉOLIENNE DOTÉE D'UN TEL RACCORDEMENT À BRIDE ET PROCÉDÉ DE SURVEILLANCE DUDIT RACCORDEMENT À BRIDE

(30) Priorität: 14.03.2019 DE 102019106580
(43) Veröffentlichungstag der Anmeldung: 19.01.2022
(73) Patentinhaber: Wobben Properties GmbH, 26607 Aurich (DE)
(72) Erfinder: SCHLÜTER, Rainer, 26607 Aurich (DE); GUDEWER, Wilko, 26506 Norden (DE); COORDES, Ihno, 26632 Ihlow (DE); KNOOP, Frank, 26607 Aurich (DE); GLOYSTEIN, Nico, 26655 Westerstede (DE)
(74) Vertreter: Eisenführ Speiser
(86) Internationale Anmeldenummer: PCT/EP2020/057043
(87) Internationale Veröffentlichungsnummer: WO 2020/183028

(56) Entgegenhaltungen:
- EP-A1- 3 467 303
- CN-A- 108 507 609
- DE-A1-102015 212 906

## Beschreibung

Die Erfindung betrifft eine Flanschverbindung insbesondere einer rotierenden Bauteilverbindung einer Windenergieanlage, insbesondere eine Blattflanschverbindung, mit einem ersten Flanschteil, insbesondere einer Blattaufnahme einer Rotorblattnabe, einem zweiten Flanschteil, insbesondere einem Rotorblattflansch, mehreren Bolzen, welche das zweite Flanschteil an dem ersten Flanschteil in verbundenem Zustand halten, wobei die Bolzen jeweils mit dem ersten Flanschteil verschraubt sind, sowie eine Windenergieanlage. Weiterhin betrifft die Erfindung ein Verfahren zur Überwachung einer Flanschverbindung.

In der prioritätsbegründenden deutschen Anmeldung DE 10 2019 106 580.1 wurden vom Deutschen Patent- und Markenamt die folgenden Dokumente als Stand der Technik recherchiert: DE 10 2015 212 906 A1, EP 3 467 303 A1. Weiterer Stand der Technik ist in CN 108 507 609 A offenbart.

Eine Flanschverbindung der eingangs genannten Art ist beispielsweise von einer Windenergieanlage bekannt. Die Windenergieanlage weist einen Turm, eine Gondel, einen Generator und eine mit dem Generator verbundene Nabe auf. Die Nabe ist mit mehreren Rotorblättern verbunden, wobei jeweils ein Rotorblatt mittels einer Flanschverbindung mit der Nabe verbunden ist.

Bei derartigen Flanschverbindungen kann es infolge des Abreißens eines Teils des Bolzens zu einem Lösen desselben kommen. Das gelöste Teil des Bolzens kann zu Beschädigungen führen bzw. im Fall einer Windenergieanlage durch Herabfallen aus großer Höhe Personen gefährden. Vor diesem Hintergrund ist es wünschenswert, ein solches ungewolltes Lösen zu vermeiden sowie ein Verfahren zur Überwachung der Flanschverbindung auf ein solches ungewolltes Lösen zu ermöglichen.

Vor diesem Hintergrund war es eine Aufgabe der vorliegenden Erfindung, eine Flanschverbindung bzw. ein Verfahren zur Überwachung einer Flanschverbindung bereitzustellen, welche einen sicheren Betrieb einer Anlage mit einer derartigen Flanschverbindung ermöglicht.

Die Erfindung löst die ihr zugrundeliegende Aufgabe bei einer Flanschverbindung der eingangs bezeichneten Art, indem die Bolzen jeweils durch ein Zugmittel miteinander wirkverbunden sind. Die Erfindung macht sich hier zunutze, dass bei einem Abreißen eines Teils eines der Bolzen dieses sich zwar aus der Verbindungsaufnahme lösen kann, aber dennoch an dem Zugmittel verbleibt und damit im Bereich der Flanschverbindung.

Mit dem Zugmittel ist eine Sensoranordnung wirkverbunden, welche dazu eingerichtet ist, die auf das Zugmittel wirkende Kraft bzw. vor allem eine Änderung der von dem Zugmittel übertragenen Zugkraft zu detektieren. Eine Änderung der Zugkraft kann insbesondere aus dem Abreißen eines Teils eines der Bolzen resultieren. Das ungewollte Lösen eines Teiles zumindest der Bolzen lässt sich somit erfassen und als eine Störung der Flanschverbindung signalisieren. Dabei kann die von dem Zugmittel übertragene Zugkraft zunächst gleich oder größer Null sein. Das Lösen eines Teiles eines der Bolzen führt zu unweigerlich zu einer Änderung der Zugkraft, und zwar entweder infolge Wegfalls einer Vorspannung oder Erhöhung einer Zugkraft infolge von Massenträgheiten des sich lösenden Teils, welche von der Sensoranordnung detektiert werden kann.

Die Bolzen weisen vorzugsweise einen Zwischenverbinder, beispielsweise ein Abdeckelement oder ein Halteblech, auf, der an dem Bolzen jeweils befestigt ist und mit welchem das Zugmittel jeweils wirkverbunden ist. Mittels des Zwischenverbinders können auch bestehende Flanschverbindungen nachgerüstet werden. Der Zwischenverbinder ist vorzugsweise mit dem freien Ende des Bolzens fest verbunden.

Erfindungsgemäß ist die Sensoranordnung als eine Steckverbindung ausgebildet, die zwei Signalleitungen leitend miteinander verbindet.

Eine der Signalleitungen kann, wie beispielsweise auch die Steckverbindung selbst, als Teil eines Sicherheitsschalters ausgebildet sein. Aufgrund der Änderung der von dem Zugmittel übertragenen Zugkraft kann ein Öffnen der Steckverbindung auftreten. Hierzu ist vorgesehen, dass das Zugmittel keine Zugkraft überträgt, solange es nicht zu einem ungewollten Lösen eines Teils eines der Bolzen gekommen ist. Durch das Lösen eines Teils zumindest eines der Bolzen wird das Zugmittel gespannt, was dazu führt, dass die Steckverbindung geöffnet wird. Die Unterbrechung der leitenden Verbindung der beiden Signalleitungen kann erfasst und als eine Störung der Flanschverbindung signalisiert werden. Die Zugspannung wird bei rotatorischer Bewegung der Flanschverbindung durch Zentripetal- bzw. Zentrifugalkräfte erzeugt.

Hierzu sind die Signalleitungen an zwei zueinander beabstandeten Befestigungsstellen entlang des Zugmittels mit diesem ortsfest verbunden, wobei ausgehend von der jeweiligen Befestigungsstelle ein Signalleitungsabschnitt vorgesehen ist, an denen endseitig jeweils ein Steckerelement der Steckverbindung angeordnet ist.

Bevorzugt können die Befestigungsstellen zwischen zwei Bolzen an dem Zugmittel angeordnet sein. Durch das Vermeiden des Überspannens eines Bolzens durch die beiden Signalleitungsabschnitte kann eine Funktionsbeeinträchtigung der Sensoranordnung verhindert werden.

Damit die Steckverbindung bei einer Zunahme der von dem Zugmittel übertragenen Zugkraft geöffnet wird, ist vorgesehen, dass die beiden durch die Steckerelemente verbundenen Signalleitungsabschnitte eine geringere Länge aufweisen, als ein Abschnitt des Zugmittels zwischen den beiden Befestigungsstellen. Solange es nicht zu einem ungewollten Lösen kommt, hängt der Abschnitt des Zugmittels zwischen den Befestigungsstellen durch. Löst sich ein Teil eines der Verbindungsmittel aus der Verbindungsaufnahme, hängt dieses an dem Zugmittel, was aufgrund der zusätzlichen Gewichtskraft zum Spannen des Zugmittels führt. Das Zugmittel überträgt daher eine Zugkraft, die größer als Null ist, so dass die Befestigungsstellen an dem Zugmittel in entgegengesetzte Richtungen bewegt werden. Dies führt zum Öffnen der Steckverbindung.

Alternativ kann gemäß einer nicht beanspruchten Ausführung die Sensoranordnung zur Aufbringung einer Vorspannung auf das Zugmittel eingerichtet sein. Eine solche Sensoranordnung ermöglicht es, neben dem Auftreten einer Störung durch das Lösen eines Teils zumindest eines der Verbundteile auch das Zugmittel selbst zu überwachen. Dabei wird zudem die auf das Zugmittel aufgebrachte Vorspannung von der Sensoranordnung überwacht. Tritt eine Unterbrechung im Zugmittel selbst auf, beispielsweise durch ein Reißen des Zugmittels, fällt die von dem Zugmittel übertragene Zugkraft auf den Wert Null ab. Das Abfallen des Wertes der von dem Zugmittel übertragenen Zugkraft kann von der Sensoranordnung als eine entsprechende Störung signalisiert werden. Bei dieser Ausgestaltung bildet das Zugmittel den Messaufnehmer der Sensoranordnung.

Vorzugsweise kann gemäß der nicht beanspruchten Ausführung die Sensoranordnung ein mit dem Zugmittel verbundenes Schaltelement umfassen, das bei einer Änderung der von dem Zugmittel übertragenen Zugkraft betätigbar ist. Insbesondere verfügt das Schaltelement über mindestens zwei Schaltstellungen. Besonders bevorzugt weist das Schaltelement drei Schaltstellungen auf. Die Sensoranordnung ist vorzugsweise dazu eingerichtet, In der ersten Schaltstellung des Schaltelements zu signalisieren, dass keine Störung vorliegt, und in der zweiten Schaltstellung des Schaltelements zu signalisieren, dass eine Störung hervorgerufen durch das Lösen eines Teiles zumindest eines Bolzens vorliegt, sowie vorzugsweise in der dritten Schaltstellung des Schaltelements zu signalisieren, dass eine Störung in Form der Unterbrechung des Zugmittels vorliegt.

Insbesondere kann gemäß der nicht beanspruchten Ausführung zur Aufbringung der Vorspannung auf das Zugmittel ein Federmittel zwischen Zugmittel und Schaltelement angeordnet sein. Das Federmittel, insbesondere eine Zugfeder, verbindet das Zugmittel mit dem des Schaltelement derart, dass eine der Federkraft entsprechende Zugkraft initial durch das Zugmittel übertragen wird. Die von dem Federmittel hervorgerufene Federkraft ist hierbei geringer als die Gewichtskraft zumindest des Zwischenverbinders. Somit führt eine Unterbrechung des Zugmittels dazu, dass das Schaltelement wegen der wegfallenden Zugkraft durch das Federmittel in seine dritte Schaltstellung überführt wird. Liegt keine Unterbrechung des Zugmittels sowie kein Lösen eines Teils zumindest eines Bolzens vor, so befindet sich das Schaltelement in seiner ersten Schaltstellung. Das Lösen eines Teils mit dem daran befestigten Zwischenverbinder führt dazu, dass die von dem Zugmittel übertragene Zugkraft zunimmt. Dies führt dazu, dass das Schaltelement entgegen der Federkraft in seine zweite Schaltstellung überführt wird. Besonders bevorzugt kann das Schaltelement als ein Kippschalter ausgeführt sein. Eine verliersichere Anordnung des Zwischenverbinders kann erreicht werden, indem der Zwischenverbinder kraft-, form- und/oder stoffschlüssig mit dem freien Ende des Bolzens verbunden ist. Der Zwischenverbinder kann beispielsweise auf das freie Ende des Bolzens aufgeschraubt werden. Auch eine Klebverbindung mit dem Bolzen ist denkbar. Bevorzugt kann der Zwischenverbinder aus einem Kunststoff bestehen.

Dabei kann der Zwischenverbinder zur Aufnahme des Zugmittels quer zur Längsachse des Bolzens eingerichtet sein. Gemäß einer Ausführungsform kann der Zwischenverbinder in einem Endbereich eine Zugmittelaufnahme, beispielsweise eine quer zu seiner Längsachse orientierte Durchbohrung aufweisen, durch welche das Zugmittel hindurchführbar ist. Alternativ kann an dem Zwischenverbinder eine ringförmige Aufnahme angeformt sein, durch die das Zugmittel hindurchführbar ist. Die Durchbohrung bzw. der ringförmige Absatz weisen dabei einen Innendurchmesser auf, der größer als der Außendurchmesser des Zugmittels ist.

Gemäß einer bevorzugten Weiterbildung kann eine dem Bolzen zugeordnete Hülse durch eine Verliersicherung mit dem Zwischenverbinder verbunden sein. Der Bolzen kann sich abschnittsweise durch die Hülse erstrecken. Um zu vermeiden, dass das Lösen eines Teils zumindest eines Bolzens dazu führt, dass auch die Hülse sich lösen kann, ist die Verliersicherung vorgesehen, welche die Hülse und den Zwischenverbinder miteinander verbindet.

Dazu kann die Verliersicherung schlauchförmig ausgebildet und über die Hülse und den Zwischenverbinder steckbar bzw. streifbar sein. Die schlauchförmige Verliersicherung kann durch Befestigungsmittel wie beispielsweise Kabelbinder, Schlauchschellen oder dergleichen gegen ein Abrutschen von der Hülse und dem Zwischenverbinder gesichert werden. Alternativ ist die Verliersicherung vorzugsweise als Blech ausgeführt insbesondere als Teil des Halteblechs.

Weiterhin wird die Aufgabe durch eine Windenergieanlage der eingangs bezeichneten Art gelöst, indem diese eine Flanschverbindung nach einer der vorstehend beschriebenen Ausführungsformen aufweist. Durch die erfindungsgemäße Flanschverbindung kann ein ungewolltes Lösen eines Teils eines Bolzens verhindert werden, wodurch eine Beschädigung der Windenergieanlage vermeidbar und das Verletzungsrisiko von Wartungspersonal und anderen Personen reduziert ist. Ebenso lässt sich ein Herabfallen durch das am Zugmittel gehaltene Zwischenverbinder und das daran befindliche Teil verhindern. Insbesondere kann eine Störung der Flanschverbindung, hervorgerufen durch das ungewollte Lösen eines Teils eines Bolzens, detektiert und frühzeitig signalisiert werden, um potentiell nachfolgende Beschädigungen an der Windenergieanlage zu verhindern.

Die Erfindung ist vorstehend unter Bezugnahme auf die Flanschverbindung anhand eines ersten Aspektes beschrieben worden. In einem weiteren Aspekt betrifft die Erfindung ferner ein Verfahren zur Überwachung einer Flanschverbindung mit
- einem ersten Flanschteil,
- einem zweiten Flanschteil,
- mehreren Bolzen (20), welche das zweite Flanschteil an dem ersten Flanschteil in verbundenem Zustand halten, wobei die Bolzen jeweils mit dem ersten Flanschteil verschraubt sind,
wobei zur Überwachung auf ein ungewolltes Lösen eines Teiles zumindest eines Bolzens die Bolzen jeweils durch ein Zugmittel miteinander verbunden werden, wobei mit dem Zugmittel eine Sensoranordnung verbunden wird, welche eine Änderung einer von dem Zugmittel übertragenen Zugkraft detektiert.

Das erfindungsgemäße Verfahren macht sich die gleichen Vorteile und bevorzugten Ausführungsformen zunutze wie die vorstehend beschriebene Flanschverbindung, so dass diesbezüglich zur Vermeidung von Wiederholungen auf die obigen Ausführungen verwiesen wird. Es macht sich besonders vorteilhaft bemerkbar, dass nach dem erfindungsgemäßen Verfahren die freien Enden aller Bolzen mittels des Zwischenverbinders, insbesondere verliersicher, mit dem Zugmittel verbunden sind, so dass bei einem Abreißen eines Teils des Bolzens dieses sich aus der Verbindungsaufnahme lösen kann und dennoch an dem Zugmittel verbleibt und dies zugleich für die Überwachung auf ein ungewolltes Lösen verwendet werden kann.

Vorzugsweise wird das Zugmittel durch die Sensoranordnung in einem Betriebszustand gehalten, in welchem sich zumindest die Bolzen in einem funktionalen Zustand befinden. Unter funktionalem Zustand wird die Situation verstanden, in der an der Flanschverbindung zumindest kein ungewolltes Lösen eines Teils zumindest eines Bolzens aufgetreten ist.

Weiter vorzugsweise kann aufgrund der Änderung der Zugkraft durch die Sensoranordnung ein vom funktionalen Zustand abweichender Zustand zumindest eines Bolzens oder des Zugmittels bestimmt werden. Hierzu kann durch die Sensoranordnung auf die Funktionalität des Zugmittels in der zusätzlichen Eigenschaft als Messaufnehmer rückgeschlossen werden, d.h. ob die Funktion der Sensoranordnung als solcher noch gegeben ist. Zudem kann das ungewollte Lösen eines Teils zumindest eines Bolzens detektiert werden.

Die Sensoranordnung signalisiert vorzugsweise ob a) keine Störung vorliegt, b) eine Störung hervorgerufen durch das Lösen eines Teiles zumindest eines Bolzens vorliegt, sowie vorzugsweise ob c) eine Störung in Form der Unterbrechung des Zugmittels vorliegt.

Die Erfindung wird im Folgenden unter Bezugnahme auf die beigefügten Figuren anhand bevorzugter Ausführungsbeispiele beschrieben. Hierbei zeigen:
- Fig. 1: eine Windenergieanlage gemäß einem bevorzugten Ausführungsbeispiel;
- Fig. 2: ein Blattlager - vorliegend beispielsweise bei einer Windenergieanlage der Fig. 1 - in einer Draufsicht in Ansicht (B) und in einer seitlichen Schnittansicht entlang des Schnitts A-A in Ansicht (A);
- Fig. 3: schematisch einen ein erstes Bauteil bildenden Blattflansch in einer Draufsicht;
- Fig. 4: eine schematische Darstellung des Bolzens 20 mit einem darauf angeordneten Abdeckelement;
- Fig. 5: eine perspektivische Ansicht eines Abdeckelements gemäß einer alternativen Ausführungsform;
- Fig. 6: eine schematische Darstellung einer Sensoranordnung gemäß einer ersten Ausführungsform in einer ersten Schaltstellung in Ansicht A, einer zweiten Schaltstellung in Ansicht B und einer dritten Schaltstellung in Ansicht C;
- Fig. 7: eine schematische Darstellung einer Sensoranordnung gemäß einer zweiten Ausführungsform in einer ersten Schaltstellung;
- Fig. 8: eine schematische Darstellung mehrerer durch ein Zugmittel miteinander verbundener Bolzen;
- Fig. 9: eine schematische Darstellung der Sensoranordnung gemäß Fig. 7 in einer zweiten Schaltstellung; und
- Fig. 10: eine schematische Darstellung eines alternativen Zwischenverbinders für die Windenergieanlage und Flanschverbindung der Fig. 1 bis 9.

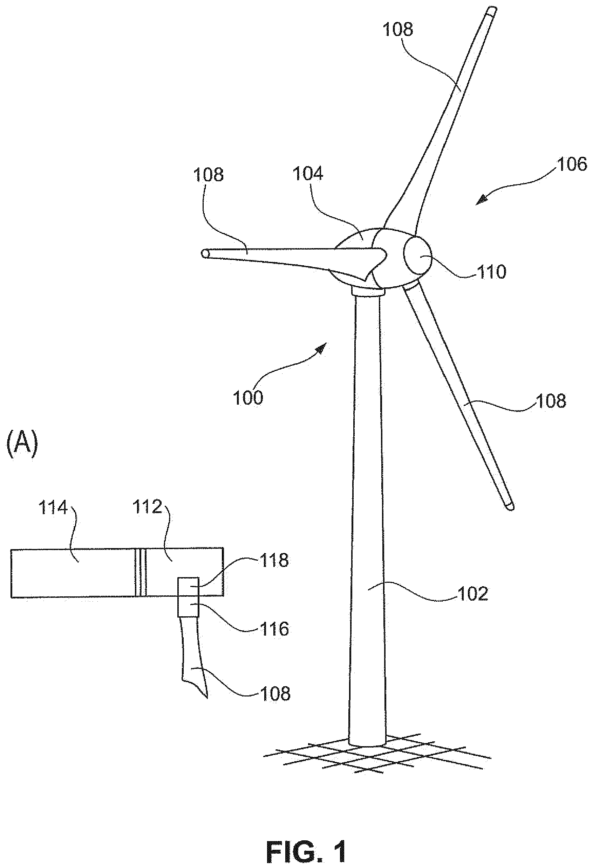

Fig. 1 zeigt eine Windenergieanlage 100 mit einem Turm 102, einer Gondel 104. An der Gondel 104 ist ein Rotor 106 mit drei Rotorblättern 108 und einem Spinner 110 angeordnet.

Die Rotorblätter 108 sind durch einen Spinner 110 an eine im Detail der Fig. 1 gezeigte Nabe 112 angebunden, die einen Generator 114 zur Erzeugung von elektrischem Strom antreibt. Beispielhaft ist in Detail (A) der Fig. 1 die Anbringung eines Rotorblatts 108 an der Nabe 112 gezeigt. Das Rotorblatt 108 ist mittels eines Blattlagers 116 mit einem Nabenadapter 118 verbunden.

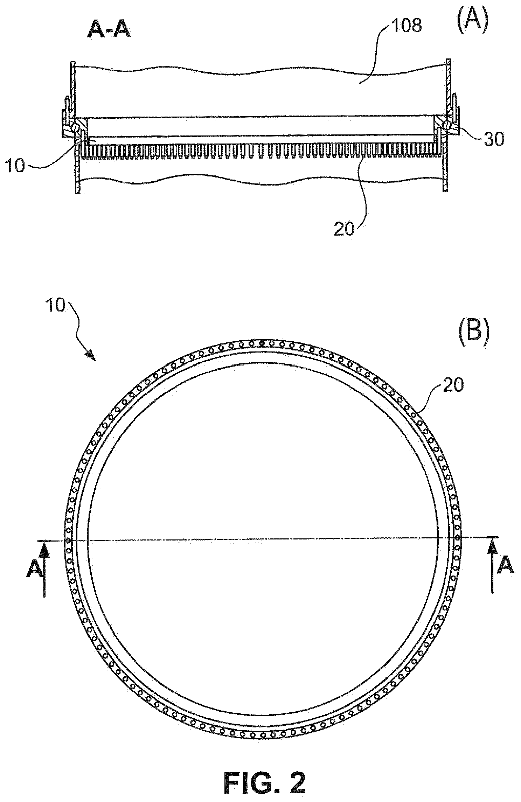

Fig. 2 zeigt dazu beispielhaft für ein Rotorblatt 108 in Ansicht (A) und Ansicht (B) einen Blattflansch 10, der ein Halteteil als erstes Flanschteil gemäß dem Konzept bildet. Weiter ist eine Reihe von Bolzen 20 in Form einer Vielzahl von Schrauben oder Schraubbolzen am Blattflansch 10 ersichtlich. Die Bolzen 20 sind in einer konzentrischen umfänglichen Reihe entlang des Blattflansches 10 angeordnet. Das untere Ende des Blattflansches 10 bildet ein Halteteil einer Flanschverbindung aus. Die Bolzen 20 sind in Form von Schraubbolzen ausgebildet, welche den Blattflansch 10 an einem Blattflanschlager 30 halten, der als zweites, ein Aufnahmeteil bildendes Flanschteil fungiert.

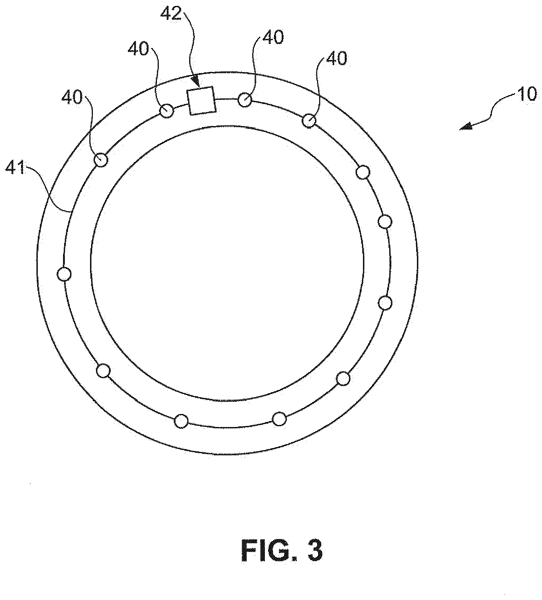

Fig. 3 zeigt schematisch den ein erstes Bauteil bildenden Blattflansch 10 in einer Draufsicht. An den freien Enden der Bolzen 20 (vgl. Fig. 2) ist jeweils ein Zwischenverbinder 40 in Form eines Abdeckelements angeordnet. Die Anordnung des Zwischenverbinders 40 erfolgt bevorzugt verliersicher, indem der Zwischenverbinder 40 mit einem Innengewinde ausgeführt ist. Die Blechvariante hat kein Gewinde, hier wird die Verliersicherheit über Klemmen und evtl. zusätzliches Kleben erreicht Der Zwischenverbinder 40 kann nach dem Verbinden des Blattflansches 10 mit dem Blattflanschlager 30 (vgl. Fig. 2) auf das jeweilige Bolzen 20 (vgl. Fig. 2) aufgeschraubt werden. Die Abdeckelemente 40 sind untereinander durch ein seilförmiges Zugmittel 41 miteinander verbunden. Insbesondere ist das Zugmittel 41 als ein Drahtseil ausgeführt. Die Enden des Zugmittels 41 sind durch eine Sensoranordnung 42 miteinander verbunden. Die Sensoranordnung 42 dient zur Überwachung auf ein ungewolltes Lösen eines Teiles zumindest eines der Bolzen 20 (vgl. Fig. 2) der Flanschverbindung. Hierzu detektiert die Sensoranordnung 42 Änderungen einer von dem Zugmittel 41 übertragenen Zugkraft F_{Zug}, wie weiter unten näher erläutert.

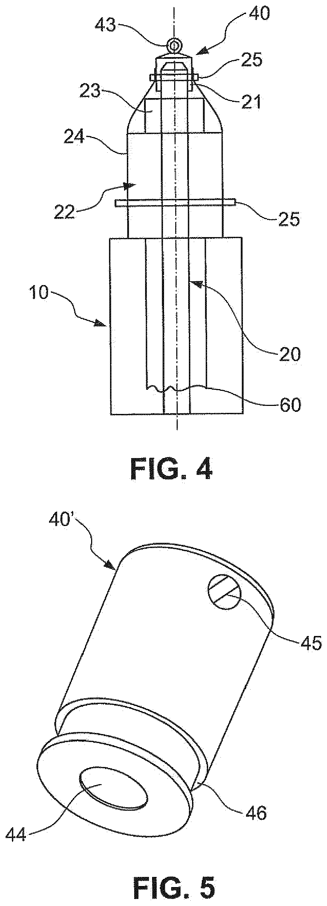

Fig. 4 zeigt eine schematische Darstellung des Bolzens 20 mit einem darauf angeordneten Zwischenverbinder 40. Der hohlzylindrische Zwischenverbinder 40 besteht vorzugsweise aus einem Kunststoff, und ist, auf einen Gewindeabschnitt 21 des Bolzens 20 aufgeschraubt. Auf den Bolzen 20 ist eine Hülse 22 aufgesetzt, die sich endseitig am Blattflansch 10 abstützt. Die Hülse 22 ist durch eine Mutter 23 in axialer Richtung fixiert.

Weiterhin kann eine schlauchförmig ausgebildete Verliersicherung 24, beispielsweise ein Ziehschlauch, über den Zwischenverbinder 40 und die Hülse 22 gestreift bzw. gestülpt werden. Die Verliersicherung 24 kann durch Befestigungsmittel 25 wie beispielsweise Kabelbinder, Schlauchschellen oder dergleichen gegen ein Verrutschen gesichert werden.

Der Zwischenverbinder 40 weist endseitig eine ringförmige Aufnahme 43 auf, durch welche das Zugmittel 41 geführt ist. Die ringförmige Aufnahme 43 kann an den Zwischenverbinder 40 im Zuge seines Fertigungsprozesses angeformt sein. Mit Bezugszeichen 60 ist ein Riss im Bolzen 20 bezeichnet, der dazu führt, dass sich der Teil des Bolzens 20 oberhalb des Risses 60 aus einer Verbindungsaufnahme des Blattflanschlager 30 (vgl. Fig. 3) lösen kann.

In Fig. 5 ist eine perspektivische Ansicht eines Abdeckelements 40' gemäß einer alternativen Ausführungsform dargestellt. Der hohlzylindrische Zwischenverbinder 40' weist eine Gewindebohrung 44 auf, mittels welcher der Zwischenverbinder 40`auf dem Bolzen 20 befestigbar ist. An einem Ende des Zwischenverbinders 40' ist eine umlaufende Befestigungsnut 46 vorgesehen. In die Befestigungsnut 46 kann das als Kabelbinder oder Schlauchschelle ausgeführte Befestigungsmittel 25 (vgl. Fig. 4) formschlüssig eingreifen. Am gegenüberliegenden Ende des Zwischenverbinders 40' ist eine Zugmittelaufnahme 45 angeordnet, beispielhaft ausgebildet als quer zur Längsachse L verlaufende Durchbohrung. Die Zugmittelaufnahme 45 dient der Hindurchführung des Zugmittels 41 (vgl. Fig. 3). Die Zugmittelaufnahme 45 kann beabstandet zum Ende der Gewindebohrung 44 positioniert sein, so dass zwischen der Zugmittelaufnahme 45 und dem Ende des Bolzens 20, auf welches der Zwischenverbinder 40' aufgeschraubt ist, sich ein axialer Abstand einstellt. Denkbar ist jedoch, ebenfalls das freie Ende des Bolzens 20 mit einer Durchbohrung zu versehen, so dass das Zugmittel 41 (vgl. Fig. 3) alternativ oder zusätzlich durch diese Durchbohrung am freien Ende des Bolzens 20 (vgl. Fig. 3) hindurchführbar wäre. Durch eine Kombination beider Durchbohrungen kann eine Vereinfachung der Form des Zwischenverbinders 40' erreicht werden. Zudem erhöht dies die Verliersicherheit sowohl des Zwischenverbinders 40 als auch des Bolzens 20 (vgl. Fig. 3).

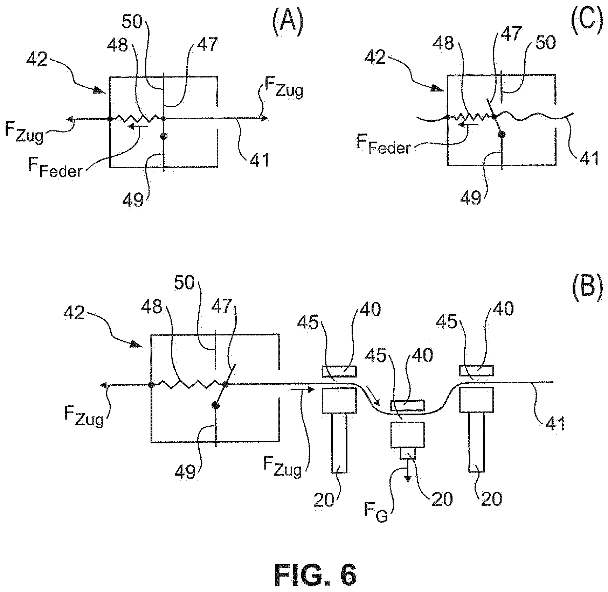

In Fig. 6 ist eine schematische Darstellung der Sensoranordnung 42 gemäß einer ersten Ausführungsform in einer ersten Schaltstellung in Ansicht (A), einer zweiten Schaltstellung in Ansicht (B) und einer dritten Schaltstellung in Ansicht (C) gezeigt. Die Sensoranordnung 42 umfasst ein Schaltelement 47 sowie ein an dem Schaltelement 47 angeordnetes Federmittel 48. Das Federmittel 48 ist bevorzugt als eine Zugfeder ausgeführt. Das Zugmittel 41 ist mit einem Ende mit dem Schaltelement 47 verbunden und mit dem anderen Ende mit dem Federmittel 48. Das Zugmittel 41 verbindet alle in der konzentrischen umfänglichen Reihe entlang des Blattflansches 10 (vgl. Fig. 4) angeordneten Verbindungsmittel 20 miteinander durch das Hindurchführen des Zugmittels 41 durch die Zugmittelaufnahmen 45 der Abdeckelemente 40.

Durch das Schaltelement 47 sind, abhängig von der eingenommenen Schaltstellung, zwei Signalleitungsabschnitte 49, 50 einer Signalleitung miteinander leitend verbindbar. Das Federmittel 48 beaufschlagt das Zugmittel 41 aufgrund seiner Federkraft F_{Feder} mit einer konstanten Vorspannung, um wie in Ansicht (A) dargestellt, das Zugmittel 41 zu spannen, so dass von diesem eine Zugkraft F_{Zug} übertragen wird. Dabei befindet sich das Schaltelement 47 in seiner ersten Schaltstellung, in welcher die Signalleitungsabschnitte 49 und 50 leitend miteinander verbunden sind. Dadurch signalisiert die Sensoranordnung 42, dass die Flanschverbindung keine Störung durch ein ungewolltes Lösen eines Teiles zumindest eines Bolzens 20 aufweist. Die Einstellung der ersten Schaltstellung des Schaltelements 47, in welcher sich das Zugmittel 41 und das Federmittel 48 in einer Gleichgewichtslage befinden, erfolgt bei der Montage der Sensoranordnung.

In Ansicht (B) der Fig. 6 ist die zweite Schaltstellung des Schaltelements 47 dargestellt. In dieser Situation ist es zu einem ungewollten Lösen eines Teiles zumindest eines Bolzens 20 gekommen, verursacht durch den Riss 60 (vgl. Fig. 4). Dies führt dazu, dass das nun an dem Zugmittel 41 hängende Teil des Bolzens 20 eine zusätzliche Gewichtskraft F_{G} auf das vorgespannte Zugmittel 41 aufbringt, so dass die von dem Zugmittel 41 übertragene Zugkraft F_{Zug} größer als die Federkraft F_{Feder} des Federmittels 48 ist. Dies führt dazu, dass das Schaltelement 47 in seine zweite Schaltstellung überführt wird, in welcher die leitende Verbindung der Signalleitungsabschnitte 49 und 50 unterbrochen wird. Die Unterbrechung wird nach außen als eine Störung signalisiert.

In Ansicht (C) der Fig. 6 ist die dritte Schaltstellung des Schaltelements 47 dargestellt. Die dritte Schaltstellung resultiert aus einer Unterbrechung des Zugmittels 41, beispielsweise durch Reißen. Durch die Unterbrechung bedingt überträgt das Zugmittel 47 keine Zugkraft, so dass das Schaltelement 47 durch das Federmittel 48 betätigt wird. Die Betätigung des Schaltelements 47 führt zur Unterbrechung der leitenden Verbindung der Signalleitungsabschnitte 49 und 50. Die Unterbrechung wird nach außen als eine Störung signalisiert.

Das Schaltelement 47 kann beispielsweise als ein Kippschalter ausgeführt sein. Die Bewegungsrichtung des als Kippschalter ausgeführten Schaltelements 47 bei der Überführung von der ersten Schaltstellung in die zweite oder dritte Schaltstellung kann ebenfalls detektiert werden, so dass zusätzlich eine Differenzierung hinsichtlich der Ursache bei der Meldung der Störung vorgesehen sein kann.

Mittels der Sensoranordnung 42, bei welcher das Zugmittel 41 als Messaufnehmer fungiert, wird einerseits das ungewollte Lösen eines Teils des Bolzens 20 verhindert, indem das Teil durch den Zwischenverbinder 40 mit dem Zugmittel 41 verbunden bleibt. Zum anderen wird das ungewollte Lösen des Teils durch eine Änderung der von dem Zugmittel 41 übertragenen Zugkraft F_{Zug} detektiert.

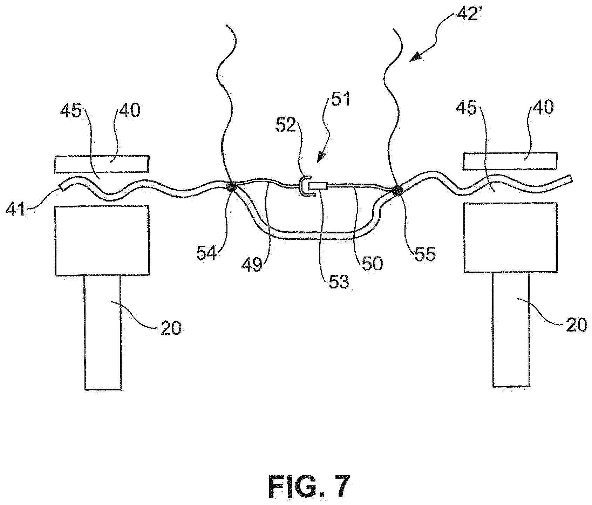

In Fig. 7 ist eine schematische Darstellung einer Sensoranordnung 42' gemäß einer zweiten Ausführungsform in einer ersten Schaltstellung gezeigt. Die Sensoranordnung 42' umfasst eine Steckverbindung 51, welche zwei Signalleitungsabschnitte 49, 50 zweier Signalleitungen durch Steckerelemente 52, 53 leitend miteinander verbindet. Die Signalleitungen sind an zwei zueinander beabstandeten Befestigungsstellen 54, 55 entlang des Zugmittels 41 mit diesem ortsfest verbunden. Ausgehend von der jeweiligen Befestigungsstelle 54, 55 erstreckt sich der jeweilige Signalleitungsabschnitt 49, 50, an denen endseitig das jeweilige Steckerelement 52, 53 der Steckverbindung 51 angeordnet ist. Wie zuvor bereits anhand der ersten Ausführungsform des Sensoranordnung 42 beschrieben, wird durch die Sensoranordnung 42` ebenfalls eine Änderung der von dem Zugmittel 41 übertragenen Zugkraft detektiert. Hiervon unterscheidet sich die zweite Ausführungsform der Sensoranordnung 42` dadurch, dass auf das Zugmittel 41 keine Vorspannung aufgebracht wird. Das Zugmittel 41 wird durch die Zugmittelaufnahmen 45 der Zwischenverbinder 40 geführt. Die freien Enden des Zugmittels 41 werden danach durch einen Verschluss spannungsfrei miteinander verbunden.

Die beiden durch die Steckerelemente 52, 53 verbundenen Signalleitungsabschnitte 49, 50 weisen eine geringere Länge auf, als der Abschnitt des Zugmittels 41 zwischen den beiden Befestigungsstellen 54, 55, d.h. das Zugmittel 41 hängt zwischen den beiden Befestigungsstellen 54, 55 durch. Die von der Steckverbindung 51 aufgebrachte Haltekraft ist so gewählt, dass die leitende Verbindung der beiden Signalleitungsabschnitte 49, 50 in ungespanntem Zustand des Zugmittels 41 Bestand hat.

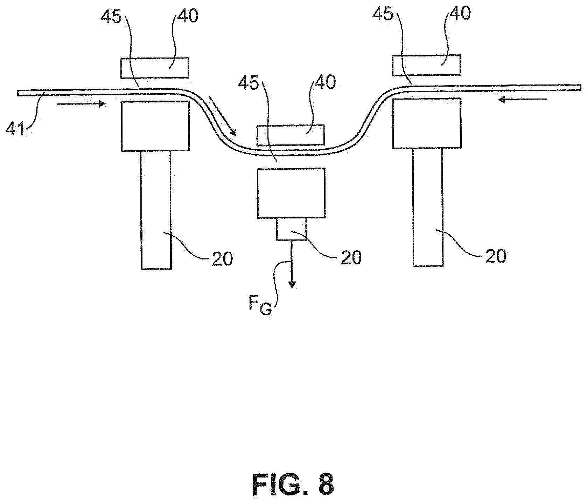

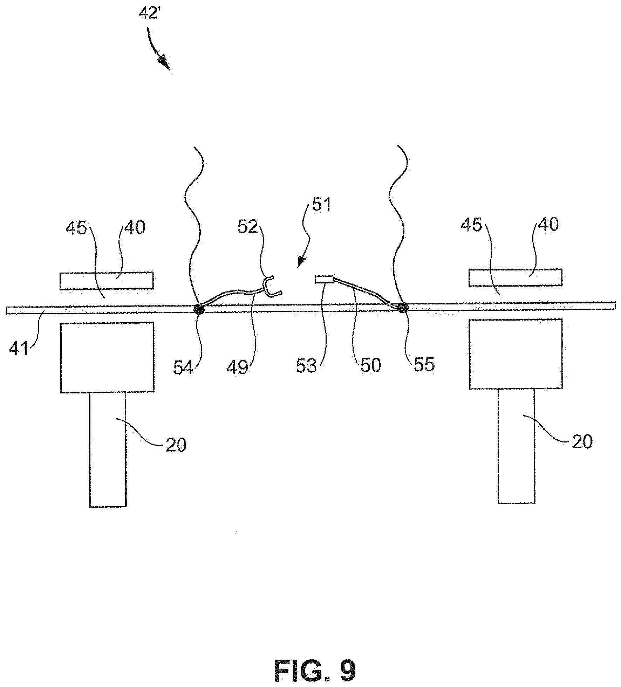

In Fig. 8 ist eine schematische Darstellung mehrerer durch das Zugmittel 41 miteinander verbundener Bolzen 20 gezeigt, welche sich in einem Abstand zu der Sensoranordnung 42` (vgl. Fig. 7) befinden. Ein Teil eines der Bolzen 20 hat sich durch das Auftreten des Risses 60 (vgl. Fig. 4) ungewollt gelöst und übt nun eine Gewichtskraft F_{G} auf das vorgespannte Zugmittel 41 aus. Dies führt dazu, dass durch das bis zum Zeitpunkt des ungewollten Lösens des Teils des Bolzens ungespannte Zugmittel 41 gespannt eine Zugkraft F_{Zug} übertragen wird. Der Effekt der Übertragung der Zugkraft F_{Zug} wird in Fig. 9 veranschaulicht.

In Fig. 9 ist eine schematische Darstellung der Sensoranordnung 42` gemäß Fig. 7 in einer zweiten Schaltstellung gezeigt. Das Spannen des Zugmittels 41 durch das an einer beliebigen Stelle entlang des Zugmittels 41 ungewollt gelösten Teils des Bolzens 20 führt dazu, dass die Haltekraft der Steckverbindung 51 überschritten wird, was dazu führt, dass die beiden Steckerelemente 52, 53 voneinander gelöst werden. Die Unterbrechung der leitenden Verbindung der Signalleitungsabschnitte 49, 50 wird nach außen als eine Störung signalisiert.

Die Sensoranordnung 42 gemäß der ersten Ausführungsform detektiert eine Änderung der von dem Zugmittel 41 übertragen Zugkraft F_{Zug} in Form einer Abnahme der Zugkraft F_{Zug}. Die Sensoranordnung 42` gemäß der zweiten Ausführungsform hingegen detektiert eine Änderung der von dem Zugmittel 41 übertragen Zugkraft F_{Zug} in Form einer Zunahme der Zugkraft Fzug.

Beiden Ausführungsformen ist gemeinsam, dass das Zugmittel 41 in Verbindung mit den Zwischenverbindern 40, 40' verhindern, dass ein ungewolltes Lösen eines Teils eines Bolzens 20 der Flanschverbindung zu einer Beschädigung der Windenergieanlage 100 führt, da es durch das Zugmittel 41 im Bereich der Flanschverbindung gehalten wird. Zusätzlich wird das ungewollte Lösen durch die Sensoranordnung 42, 42' detektiert und nach außen signalisiert, so dass eine weiterführende Beschädigung der Windenergieanlage 100 verhindert werden kann.

In den Figuren 1 bis 9 ist das Zugmittel 41 mittels eines Zwischenverbinders 40, 40' in Form eines Abdeckelements mit den Bolzen verbunden. Ebenso von der Erfindung umfasst sind aber auch Ausgestaltungen, bei denen das Zugmittel 41 unmittelbar mit dem Bolzen verbunden ist.

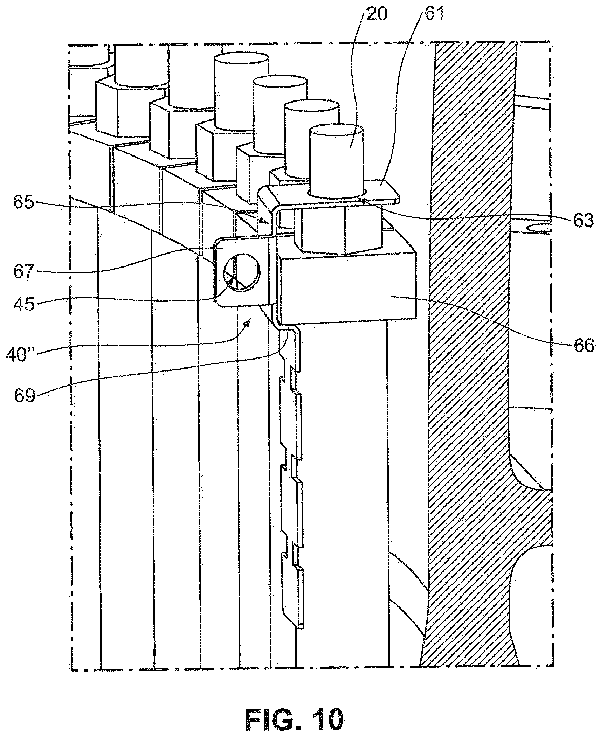

In Figur 10 ist eine weitere bevorzugte Alternative eines Zwischenverbinders, versehen mit Bezugszeichen 40", dargestellt. Der Zwischenverbinder 40" ist als Halteblech ausgebildet, wobei der Term "Blech" bezogen ist auf die geometrische Grundform eines Flachkörpers. Im Sinne der Erfindung sind zusätzlich zu metallischen Blechen im eigentlichen Wortsinn auch entsprechend geformte und funktionierende Elemente aus anderen Materialen als "Haltebleche" zu verstehen, beispielsweise Kunststoffkörper, wobei tatsächliche Bleche aufgrund ihrer Festigkeitseigenschaften eine bevorzugte Ausführungsform darstellen.

Der Zwischenverbinder 40" weist die Grundform eines mehrfach umgebogenen Blechs bzw. Flachkörpers auf. In einem ersten Abschnitt 61 ist eine Bolzenaufnahme 63 ausgebildet, vorzugsweise als Durchgangsbohrung. Angrenzend an den ersten Abschnitt 61 weist der Zwischenverbinder 40" einen zweiten Abschnitt 63 auf, der sich kippsicher an ein Druckstück 66 anlegt. An dem zweiten Abschnitt 63 ist in Form einer Lasche 67 die Zugmittelaufnahme 45 ausgebildet, in diesem Fall wiederum als Durchgangsbohrung.

Angrenzend an den zweiten Abschnitt 63 weist der Zwischenverbinder eine Schulter 69 auf, die als Widerlager an dem Druckstück 66 des Bolzens 20 anliegt. Die Schulter 69 ist derart positioniert, dass der Zwischenverbinder mittels Einrasten bzw. Einklicken an dem Bolzen 20 angebracht werden kann.

Allgemein ist es erfindungsgemäß vorgesehen, den Zwischenverbinder 40,40',40" kraftschlüssig (beispielsweise mittels Verschrauben), formschlüssig (beispielsweise mittels Klickverbindung) oder stoffschlüssig (beispielsweise mittels Kleben) mit dem Bolzen zu verbinden, oder mittels einer Kombination mehrerer oder sämtlicher dieser Maßnahmen, je nach Anwendungsfall.

## Patentansprüche

1. Flanschverbindung einer rotierenden Bauteilverbindung, insbesondere einer Windenergieanlage, insbesondere Blattflanschverbindung, mit
- einem ersten Flanschteil (10), insbesondere einer Blattaufnahme einer Rotorblattnabe,
- einem zweiten Flanschteil (30), insbesondere einem Rotorblattflansch,
- mehreren Bolzen (20), welche das zweite Bauteil (30) an dem ersten Flanschteil (10) in verbundenem Zustand halten, wobei die Bolzen (20) jeweils mit dem ersten Flanschteil verschraubt sind,
wobei die zumindest zwei Bolzen (20) jeweils durch ein Zugmittel (41) miteinander verbunden sind, wobei mit dem Zugmittel (41) eine Sensoranordnung (42, 42`) wirkverbunden ist, welche eine Änderung einer von dem Zugmittel (41) übertragenen Zugkraft (F_{Zug}) detektiert,
**dadurch gekennzeichnet, dass** die Sensoranordnung (42`) eine Steckverbindung (51) umfasst, die zwei Signalleitungen leitend miteinander verbindet, wobei die Signalleitungen an zwei zueinander beabstandeten Befestigungsstellen (54, 55) entlang des Zugmittels (41) mit diesem ortsfest verbunden sind, wobei ausgehend von der jeweiligen Befestigungsstelle (54, 55) ein Signalleitungsabschnitt (49, 50) vorgesehen ist, an denen endseitig jeweils ein Steckerelement (52, 53) der Steckverbindung (51) angeordnet ist.

2. Flanschverbindung nach Anspruch 1, **dadurch gekennzeichnet, dass** die Befestigungsstellen zwischen zwei Bolzen (20) angeordnet sind.

3. Flanschverbindung nach Anspruch 1 oder 2, **dadurch gekennzeichnet, dass** die beiden durch die Steckerelemente (52, 53) verbundenen Signalleitungsabschnitte (49, 50) eine geringere Länge aufweisen, als ein Abschnitt des Zugmittels (41) zwischen den beiden Befestigungsstellen (54, 55).

4. Flanschverbindung nach einem der Ansprüche 1 bis 3, **dadurch gekennzeichnet, dass** die Bolzen (20) einen Zwischenverbinder (40, 40') aufweisen, der an den Bolzen (20) befestigt ist und mit welchem das Zugmittel (41) jeweils wirkverbunden ist.

5. Flanschverbindung nach Anspruch 4, **dadurch gekennzeichnet, dass** der Zwischenverbinder (40, 40`) kraft-, form- und/oder stoffschlüssig mit dem freien Ende des Bolzens (20) verbunden ist.

6. Flanschverbindung nach einem der Ansprüche 4 oder 5, **dadurch gekennzeichnet, dass** der Zwischenverbinder (40, 40`) zur Aufnahme des Zugmittels (41) quer zur Längsachse des Bolzens (20) eingerichtet ist.

7. Flanschverbindung nach einem der Ansprüche 4 bis 6, **dadurch gekennzeichnet, dass** eine dem Bolzen (20) zugeordnete Hülse (22) durch eine Verliersicherung (24) mit dem Zwischenverbinder (40, 40`) verbunden ist.

8. Flanschverbindung nach Anspruch 7, **dadurch gekennzeichnet, dass** die Verliersicherung (24) schlauchförmig ausgebildet und über die Hülse (22) und den Zwischenverbinder (40, 40`) streifbar ist, oder dass die Verliersicherung als Blech ausgeführt ist.

9. Windenergieanlage (100) mit einer Flanschverbindung nach einem der Ansprüche 1 bis 8.

10. Windenergieanlage (100) nach Anspruch 9, **dadurch gekennzeichnet, dass** die Windenergieanlage (100) einen Turm (102), eine Gondel (104), einen Generator (114) und eine mit dem Generator verbundene Nabe aufweist, wobei die Nabe mit mehreren Rotorblätter (108) verbunden ist, und wobei jeweils ein Rotorblatt (108) mittels einer Flanschverbindung mit der Nabe verbunden ist, wobei die Flanschverbindung nach einem der Ansprüche 1 bis 8 ausgebildet ist.

11. Verfahren zur Überwachung einer Flanschverbindung nach einem der Ansprüche 1 bis 8 mit
- einem ersten Flanschteil (10), insbesondere einer Blattaufnahme einer Rotorblattnabe,
- einem zweiten Flanschteil (30), insbesondere einem Rotorblattflansch,
- mehreren Bolzen (20), welche das zweite Flanschteil (30) an dem ersten Flanschteil (10) in verbundenem Zustand halten, wobei die Bolzen (20) jeweils mit dem ersten Flanschteil verschraubt sind,
wobei zur Überwachung auf ein ungewolltes Lösen eines Teiles zumindest eines der Bolzen (20) die Bolzen (20) jeweils durch ein Zugmittel (41) miteinander verbunden werden, wobei mit dem Zugmittel (41) eine Sensoranordnung (42, 42`) verbunden wird, welche eine Änderung einer von dem Zugmittel (41) übertragenen Zugkraft (F_{Zug}) detektiert.

12. Verfahren nach Anspruch 11, **dadurch gekennzeichnet, dass** das Zugmittel (41) durch die Sensoranordnung (42, 42`) in einem Betriebszustand gehalten wird, in welchem sich zumindest die Bolzen (20) in einem funktionalen Zustand befinden, und/oder dass aufgrund der Änderung der Zugkraft (FZug) durch die Sensoranordnung (42, 42`) ein von dem funktionalen Zustand abweichender Zustand zumindest eines der Bolzen (20) oder des Zugmittels (41) bestimmt wird.

## Claims

1. A flange connection of a rotating component connection, in particular of a wind turbine, in particular a blade flange connection, having
- a first flange part (10), in particular a blade receiver of a rotor blade hub,
- a second flange part (30), in particular a rotor blade flange,
- a plurality of bolts (20) that, in a connected state, hold the second component (30) against the first flange part (10), wherein the bolts (20) are each threadedly connected to the first flange part,
wherein the at least two bolts (20) are in each case operatively connected to one another by a tension means (41), wherein a sensor arrangement (42, 42') that detects a change in a tensile force (Fₜₑₙₛᵢₗₑ) transmitted by the tension means (41) is operatively connected to the tension means (41),
**characterized in that** the sensor arrangement (42') comprises a plug-and-socket connection (51) that conductively connects two signal lines to one another, wherein the signal lines are fixedly connected to the tension means (41) at two mutually spaced-apart fastening points (54, 55) along the latter, wherein, starting from the respective fastening point (54, 55) there is provided a signal-line portion (49, 50), on each of which a connector element (52, 53) of the plug-and-socket connection (51) is arranged at the end.

2. The flange connection as claimed in claim 1, **characterized in that** the fastening points are arranged between two bolts (20).

3. The flange connection as claimed in claim 1 or 2, **characterized in that** the two signal line portions (49, 50) connected by the connector elements (52, 53) have a shorter length than a portion of the tension means (41) between the two fastening points (54, 55).

4. The flange connection as claimed in in any one of claims 1 to 3, **characterized in that** the bolts have an intermediate connector, which is fastened to the bolt and to which the tension means (41) in each case is operatively connected.

5. The flange connection as claimed in claim 4, **characterized in that** the intermediate connector (40, 40') is connected to the free end of the bolt (20) in a force-fitting, form-fitting and/or materially bonded manner.

6. The flange connection as claimed in claim 4 or 5, **characterized in that** the intermediate connector (40, 40') is configured to receive the tension (41) means transversely in relation to the longitudinal axis of the bolt (20).

7. The flange connection as claimed in any one of the claims 4 to 6, **characterized in that** a sleeve (22) assigned to the bolt (20) is connected to the intermediate connector (40, 40') by a loss prevention device (24).

8. The flange connection as claimed in claim 7, **characterized in that** the loss prevention device (24) is realized in the form of a tube, and can be slipped over the sleeve (22) and the intermediate connector (40, 40'), or **in that** the loss prevention device is realized as a plate.

9. A wind turbine (100) having a flange connection as claimed in any one of claims 1 to 8.

10. The wind turbine (100) as claimed in claim 9, **characterized in that** the wind turbine (100) has a tower (102), a nacelle (104), a generator (114) and a hub that is connected to the generator, wherein the hub is connected to a plurality of rotor blades (108), and wherein in each case a rotor blade (108) is connected to the hub by means of a flange connection, wherein the flange connection is realized as claimed in any one of claims 1 to 8.

11. A method for monitoring a flange connection as claimed in any one of claims 1 to 8 comprising
- a first flange part (10), in particular a blade receiver of a rotor-blade hub,
- a second flange part (30), in particular a rotor-blade flange,
- a plurality of bolts (20) holding the second flange part (30) to the first flange part (10) in a connected state, wherein the bolts (20) are each threadedly connected to the first flange part,
wherein for the purpose of monitoring for an unwanted detachment of a part of at least one of the bolts (20), the bolts (20) are each connected to one another by a tension means (41), wherein connected to the tension means (41) is a sensor arrangement (42, 42') that detects a change in a tensile force (Fₜₑₙₛᵢₗₑ) transmitted by the tension means (41).

12. The method as claimed in claim 11, **characterized in that**
- the tension means (41) is maintained by the sensor arrangement (42, 42') in an operational state in which at least the bolts (20) are in a functional state,
and/or
- a state of at least one of the bolt (20) or of the tension means (41) deviating from the functional state is determined by the sensor arrangement (42, 42') on the basis of the change in the tensile force (Fₜₑₙₛᵢₗₑ).

## Revendications

1. Liaison à bride d'une liaison de composant rotative, en particulier d'une éolienne, en particulier liaison à bride de pale, avec
- une première partie de bride (10), en particulier un logement de pale d'un moyeu de pale de rotor,
- une seconde partie de bride (30), en particulier une bride de pale de rotor,
- plusieurs boulons (20) qui maintiennent le second composant (30) au niveau de la première partie de bride (10) dans l'état relié, dans laquelle les boulons (20) sont vissés respectivement à la première partie de bride,
dans laquelle les au moins deux boulons (20) sont reliés entre eux respectivement par un moyen de traction (41), dans laquelle un ensemble de capteur (42, 42') est activement relié au moyen de traction (41), lequel détecte une modification d'une force de traction (F_{traction}) transmise par le moyen de traction (41),
**caractérisée en ce que** l'ensemble de capteur (42') comprend une liaison enfichée (51) qui relie entre eux de manière conductrice deux câbles de signal, dans laquelle les câbles de signal au niveau de deux points de fixation (54, 55) espacés l'un par rapport à l'autre le long du moyen de traction (41) sont fixement reliés à celui-ci, dans laquelle, à partir du point de fixation (54, 55) respectif, une section de câble de signal (49, 50) est prévue, au niveau de laquelle, côté extrémité, respectivement un élément connecteur (52, 53) de la liaison enfichée (51) est agencé.

2. Liaison à bride selon la revendication 1, **caractérisée en ce que** les points de fixation sont agencés entre deux boulons (20).

3. Liaison à bride selon la revendication 1 ou 2, **caractérisée en ce que** les deux sections de câble de signal (49, 50) reliées par les éléments connecteurs (52, 53) présentent une longueur plus petite qu'une section du moyen de traction (41) entre les deux points de fixation (54, 55).

4. Liaison à bride selon l'une quelconque des revendications 1 à 3, **caractérisée en ce que** les boulons (20) présentent un connecteur intermédiaire (40, 40') qui est fixé au boulon (20) et auquel le moyen de traction (41) est relié activement respectivement.

5. Liaison à bride selon la revendication 4, **caractérisée en ce que** le connecteur intermédiaire (40, 40') est relié à force, par complémentarité de formes et/ou par matière à l'extrémité libre du boulon (20).

6. Liaison à bride selon l'une quelconque des revendications 4 ou 5, **caractérisée en ce que** le connecteur intermédiaire (40, 40') est conçu pour la réception du moyen de traction (41) transversalement à l'axe longitudinal du boulon (20).

7. Liaison à bride selon l'une quelconque des revendications 4 à 6, **caractérisée en ce qu'**une douille (22) associée au boulon (20) est reliée par une sécurité contre la perte (24) au connecteur intermédiaire (40, 40').

8. Liaison à bride selon la revendication 7, **caractérisée en ce que** la sécurité contre la perte (24) est réalisée en forme de tuyau et peut être striée au-dessus de la douille (22) et du connecteur intermédiaire (40, 40'), ou **en ce que** la sécurité contre la perte est réalisée sous forme de tôle.

9. Eolienne (100) avec une liaison à bride selon l'une quelconque des revendications 1 à 8.

10. Eolienne (100) selon la revendication 9, **caractérisée en ce que** l'éolienne (100) présente une tour (102), une nacelle (104), un générateur (114) et un moyeu relié au générateur, dans laquelle le moyeu est relié à plusieurs pales de rotor (108), et dans laquelle respectivement une pale de rotor (108) est reliée, au moyen d'une liaison à bride, au moyeu, dans laquelle la liaison à bride est réalisée selon l'une quelconque des revendications 1 à 8.

11. Procédé de surveillance d'une liaison à bride selon l'une quelconque des revendications 1 à 8 avec
- une première partie de bride (10), en particulier un logement de pale d'un moyeu de pale de rotor,
- une seconde partie de bride (30), en particulier une bride de pale de rotor,
- plusieurs boulons (20) qui maintiennent la seconde partie de bride (30) au niveau de la première partie de bride (10) dans l'état relié, dans lequel les boulons (20) sont vissés respectivement à la première partie de bride,
dans lequel les boulons (20) sont reliés entre eux respectivement par un moyen de traction (41) pour la surveillance d'un détachement involontaire d'une partie au moins d'un des boulons (20), dans lequel un ensemble de capteur (42, 42') est relié au moyen de traction (41), lequel détecte une modification d'une force de traction (F_{traction}) transmise par le moyen de traction (41).

12. Procédé selon la revendication 11, **caractérisé en ce que** le moyen de traction (41) est maintenu dans un état de fonctionnement par l'ensemble de capteur (42, 42'), dans lequel au moins les boulons (20) se trouvent dans un état fonctionnel, et/ou
**en ce qu'**un état s'écartant de l'état fonctionnel d'au moins un des boulons (20) ou du moyen de traction (41) est déterminé en raison de la modification de la force de traction (F_{traction}) par l'ensemble de capteur (42, 42').
